# EUROPÄISCHE PATENTANMELDUNG

(11) **EP 0 841 797 A2**
(43) Veröffentlichungstag der Anmeldung: **13.05.1998**
(21) Anmeldenummer: 97250299.1
(22) Anmeldetag: 10.10.1997
(51) Int. Cl.: H04M 3/54, H04Q 7/22

(54) **Verfahren zur Umleitung eines Rufes**

(30) Priorität: 11.11.1996 DE 19647709
(71) Anmelder: MANNESMANN Aktiengesellschaft, 40213 Düsseldorf (DE)
(72) Erfinder: Löchte, Andreas, Dipl.-Ing., 41564 Kaarst (DE)
(74) Vertreter: Henze, Lothar

(57) **Zusammenfassung**

Die Erfindung betrifft ein Verfahren zur Umleitung eines Rufes, der an eine vorgegebene Empfängeradresse eines adressiert ist, zu einer Zielrufnummer eines Mobilfunknetzes, insbesondere eines GSM- oder DCS-Mobilfunknetzes, wobei innerhalb des Mobilfunknetzes jede übertragene Information die Absenderrufnummer enthält. Um einem Teilnehmer des Mobilfunknetzes die Möglichkeit zugeben, alle an einem vorgegebenen Anschluß mit einer zugeordneten Telefonnummer ankommenden Telefongespräche oder Daten eines Kommunikationsnetzes, insbesondere eines Telefonfestnetzes, zu seiner Mobilfunktelefonnummer umzuleiten, wird mit der Erfindung vorgeschlagen, daß durch einen Teilnehmer des Mobilfunknetzes an einen Kurzmitteilungsservice des Mobilfunknetzes eine die Empfängeradresse enthaltende Kurzmitteilung übermittelt wird, daß die Empfängeradresse mit der Absenderrufnummer an eine vermittlungstechnische Anlage weitergeleitet wird und daß die vermittlungstechnische Anlage eine Umleitung des Rufes von der Empfängeradresse des Kommunikationsnetzes zur Absenderrufnummer des Mobilfunknetzes als neue Zielrufnummer einrichtet.

## Beschreibung

Die Erfindung betrifft ein Verfahren zur Umleitung eines Rufes gemäß dem Oberbegriff des Anspruchs 1.

Es ist allgemein bekannt, Telefongespräche, die an einen Teilnehmer eines Telefonfestnetzes mit einer zugeordneten Empfängeradresse (Telefonnummer) gerichtet sind, zu einer vorgegebenen Zielrufnummer eines Mobilfunknetzes (Mobilfunk-Telefonnummer) umzuleiten. Hierbei wird ein Rufumleitungsauftrag an das Telefonfestnetz übermittelt. Das Telefonfestnetz schaltet daraufhin eine Rufumleitung zu der Zielrufnummer, so daß alle ankommenden Telefongespräche selbsttätig zur Zielrufnummer (neue Empfangeradresse, Mobilfunk-Telefonnummer) umgeleitet werden.

Jeder Teilnehmer hat dabei immer nur die Möglichkeit, ankommende Anrufe von dem eigenen Telefongerät zu einem anderen Telefongerät, z.B. eines Mobilfunknetzes, umleiten zu lassen. Die Möglichkeit, daß ein Teilnehmer eines Mobilfunknetzes alle an einen vorgegebenen Anschluß mit einer zugeordneten Empfängeradresse ankommenden Telefongespräche oder Daten eines anderen oder des eigenen Telefonnetzes an seine Mobilfunk-Telefonnummer umleiten läßt, ist hierbei nicht vorgesehen.

Ferner sind bekannte Mobilfunknetzes gemäß der GSM-Spezifikation (Global System for Mobile Communication) oder der DCS-Spezifikation (Digital Cellular System) aufgebaut. Im Rahmen dieser Spezifikationen ist ein sogenannter Kurzmitteilungsdienst (SMS Short Message Service) vorgesehen, der es gestattet, Textinformationen mit einer maximalen Länge von 160 Zeichen von einem Teilnehmer zu einem anderen Teilnehmer zu versenden. Diese sprachungebundenen Textinformationen werden in Form eines Datenpaketes übertragen, wobei jedes Datenpaket gemäß Spezifikation aus einer Absenderrufnummer, einer Empfängeradresse und einer Nachricht, welche die Textinformation enthält, besteht. Die Datenpakete werden in einem Dienstzentrum, dem sogenannten Short Message Service Center (SMSC), verwaltet. Dazu gehört, daß beispielsweise eine an einen Teilnehmer, der momentan nicht im Mobilfunknetz angemeldet ist, gerichtete Nachricht solange gespeichert wird, bis der adressierte Teilnehmer sich im Mobilfunknetz angemeldet hat und die Nachricht somit zustellbar wird.

Als nachteilig wird angesehen, daß es derzeit nicht möglich ist, daß ein Teilnehmer eines Mobilfunknetzes alle an einem Anschluß mit einer zugeordneten Telefonnummer ankommenden Telefongespräche oder Daten an seine Mobilfunktelefonnummer umleiten läßt.

Es ist die Aufgabe der vorliegenden Erfindung, ein Verfahren anzugeben, das es einem Teilnehmer eines Mobilfunknetzes ermöglicht, alle an zumindest einem vorgegebenen Anschluß mit einer zugeordneten Telefonnummer ankommenden Telefongespräche oder Daten eines anderen oder des eigenen Telefonnetzes an seine Mobilfunk-Telefonnummer umleiten zu lassen.

Die Lösung dieser Aufgabe ist erfindungsgemäß gekennzeichnet durch die im Patentanspruch 1 angegebenen Merkmale. Durch die kennzeichnenden Merkmale der Unteransprüche 2 bis 9 ist das Verfahren in vorteilhafter Weise weiterausgestaltet.

Die Erfindung sieht vor, daß durch einen Teilnehmer des Mobilfunknetzes an einen Kurzmitteilungsservice des Mobilfunknetzes eine einen Auftrag enthaltende Kurzmitteilung übermittelt wird, daß der Kurzmitteilungsservice anhand des Auftrags die Empfängeradresse mit der Absenderrufnummer an eine vermittlungstechnische Anlage weiterleitet und daß die vermittlungstechnische Anlage eine Umleitung des Rufes von der Empfängeradresse des Kommunikationsnetzes zur Absenderrufnummer des Mobilfunknetzes als neue Zielrufnummer ausführt. Dabei kann der Auftrag die volle Empfängeradresse enthalten; genauso ist es aber auch möglich, daß ein Kodewort oder dgl. an den Kursmitteilungsservice übermittelt wird und daß der Kurzmitteilungsservice selbsttätig anhand des Kodeworts die volle Empfängeradresse zuordnet.

Ein derartiges Verfahren ermöglicht es den Teilnehmern eines Mobilfunknetzes alle Anrufe einer vorgegebenen Empfängeradresse eines anderen Kommunikationsnetzes an seine Mobilfunk-Telefonnummer umzuleiten. Über das Short Message Service Center wird hierbei eine im Rahmen des Standards übermittelte Empfängeradresse an eine vermittlungstechnische Anlage weitergeleitet, welche die Anrufumleitung der Empfängeradresse auf die Rufnummer des Mobiltelefons (aus dem Header der Kurzmitteilung) einrichtet.

Zweckmäßigerweise ist der Kursmitteilungsservice der Short Message Service des Mobilfunknetzes für zu übermittelnde Textinformationen in Form von Zeichen, wobei die Kurzmitteilung als Kurzmitteilungsinhalt die Empfängeradresse oder ein der Empfängeradresse zugeordnetes Kodewort enthält. Dadurch ist es möglich, im Rahmen des Standards den Kurzmitteilungsservice für die Rufumleitung zu verwenden.

Zweckmäßigerweise ist die Absenderrufnummer im Header der Kurzmitteilung in kodierter Form enthalten.

Besonders vorteilhaft ist es, die gesamte Logistik eine Organisation anhand von "virtuellen" Organisationsnummern dadurch zu organisieren, daß die Empfängeradresse eine logistische Organisationsnummer einer Organisation ist, über die das der Organisationsnummer zugeordnete, zeitlich wechselnde Personal der Organisation erreichbar ist. Hierdurch ist die direkte Zuordnung einer Telefonnummer zu dem entsprechenden Bedienpersonal logistisch sehr einfach zu lösen, da immer gerade das im Dienst befindliche Bedienpersonal durch Anwahl ein- und derselben Telefonnummer, die z.B. die Organisationsnummer enthält, telefonisch erreichbar ist. Dem Wechsel des Personals und/oder der Organisationsnummer wird die "Rufnummer" gleichsam dynamisch angepaßt. Die Organisationsnummer kann vorteilhafterweise eine Flugnummer einer Fluggesellschaft oder eine Zugnummer einer Bahngesellschaft sein.

Mit der Erfindung wird weiter vorgeschlagen, daß die Umleitung des Rufes dadurch zurücknehmbar ist, daß als vorgegebener Empfängeradresse eine vorgegebene Zeichenfolge an den Kurtmitteilungsservice des Mobilfunknetzes übermittelt wird. Die vorgegebene Zeichenfolge kann dabei beispielsweise eine Tilde sein.

Vorteilhafterweise erfolgt die Weiterleitung des Auftrags an die vermittlungstechnische Anlage dadurch, daß der Kurzmitteilungsservice die Empfängeradresse und die Absenderrufnummer in ein Protokoll eingebettet an die vermittlungstechnische Anlage weiterleitet.

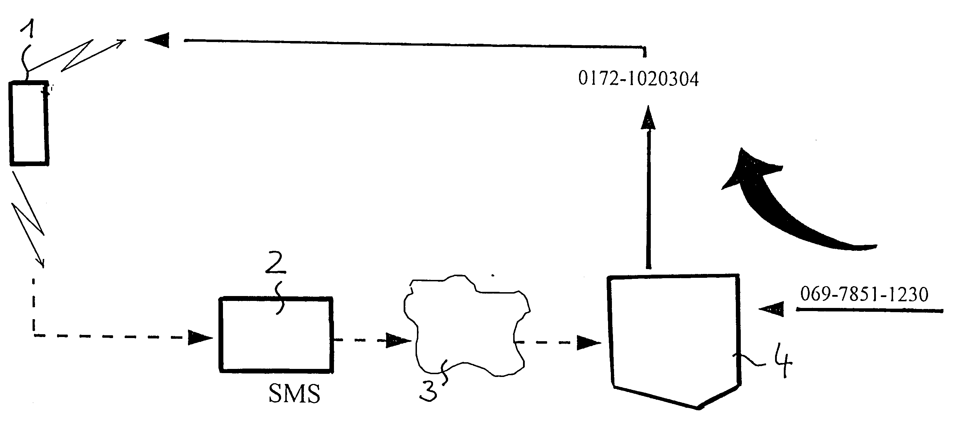

Ein Ausführungsbeispiel der Erfindung ist in der einzigen Figur der Zeichnung dargestellt und wird nachfolgend näher beschrieben. Die Figur zeigt schematisch die Umleitung einer Telefonnummer eines Telefonfestnetzes durch das Handy eines Mobilfunknetzes.

Wie die Figur erkennen läßt, handelt es sich im Ausführungsbeispiel um eine Organisation, die logistisch über Organisationsnummern organisiert ist. Im Ausführungsbeispiel ist die Organisationsnummer die Zahl "1230", diese entspricht der Durchwahl des Telefonanschlusses mit der Telefonnummer 069-7851-0, also der Telefonnummer 069-7851-1230 eines Telefonfestnetzes.

Bei der Durchwahlnummer 1230 handelt es sich im Ausführungsbeispiel um die Flugnummer einer Fluggesellschaft. Genauso kann es sich aber auch um eine Zugnummer einer Bahngesellschaft usw. handeln.

Die Rufumleitung erfolgt im Ausführungsbeispiel durch ein Handy mit der Absenderrufnummer 0172-1020304, das ist die neue Zielrufnummer (des Mobilfunknetzes), zu der die an der Empfängeradresse 069-7851-1230 des Telefonfestnetzes ankommenden Anrufe umgeleitet werden sollen.

Hierzu wird mittels eines Handy (Funktelefon) 1 ein Auftrag als Kurzmitteilung an das SMS-Service-Center 2 übermittelt, die eine Nachricht mit dem Inhalt "069-7851-1230" enthält. Diese Nachricht enthält bei einem Funktelefonnetz auch die Absenderrufnummer. Das SMS-Service-Center 2 entnimmt dem Kurzmitteilungsinhalt die Empfängeradresse und bettet diese und die Absenderrufnummer in ein Protokoll (z.B. Universal Computer Protocol UCP) ein und leitet diese Nachricht über eine ISDN-Verbindung 3 an eine vermittlungstechnische Anlage 4 weiter. Die vermittlungstechnische Anlage 4 erkennt am Kurzmitteilungsinhalt und/oder an einem zusätzlichen Kennungskode, daß es sich um eine Rufumleitung handelt. Anhand des Kurzmitteilungsinhalts und/oder des zusätzlichen Kennungskods und/oder der Absenderrufnummer, die in jeder vom Mobilfunknetz zu übertragenen Information in kodierter Form im Header enthalten ist, überprüft die vermittlungstechnische Anlage 4, ob der Teilnehmer zur Auftragserteilung in Bezug auf die gewünschte Rufumleitung berechtigt ist. Dann führt die vermittlungstechnische Anlage 4 den im Protokoll niedergelegten Auftrag aus, d. h. sie richtet eine Rufumleitung von der Empfängeradresse 069-7851-1230 des Telefonfestnetzes zur Absenderrufnummer des Mobilfunknetzes 0172-1020304 als neue Zielrufnummer ein.

Die Empfängeradresse muß selbstverständlich nicht notwendig in der Kurzmitteilung enthalten sein. Genauso ist es auch möglich, daß die Empfängeradresse in der vermittlungstechnischen Anlage 4 hinterlegt ist und daß bei Anforderung einer Rufumleitung die hinterlegte Empfängeradresse verwendet wird. So ist es beispielsweise möglich, daß einer bestimmten Absenderrufnummer eine bestimmte Empfängeradresse zur Rufumleitung zugeordnet ist. Oder daß mehreren Absenderrufnummern genau eine Empfängeradresse zugeordnet sind, wobei aber immer nur zu jeweils einer Absenderrufnummer umgeleitet wird, nämlich zu der, die als letzte eine Rufumleitung ausgelöst hat.

Ein ankommender, an die Empfängeradresse 069-7851-1230 adressierter Anruf wird nach Einrichtung der Rufumleitung selbsttätig zur Zielrufnummer 0172-1020304 umgeleitet, unter der das neue Bedienpersonal der Flugnummer 1230 erreichbar ist. Somit ist das momentan aktive Bedienpersonal immer unter derselben Flugnummer telefonisch erreichbar. Nach Wechsel des Personals kann sich das neue Personal also jeweils selbst die Anrufumleitung organisieren.

Die Zurücknahme der Rufumleitung erfolgt dadurch, daß wiederum eine Kurzmitteilung an das SMS-Service-Center 2 übermittelt wird, nur daß in diesem Falle als vorgegebene Empfängeradresse eine Tilde als vorgegebene Zeichenfolge im. Feld Kurzmitteilungsinhalt enthalten ist. Daraufhin übermittelt das SMS-Service-Center 2 über den Übertragungsweg 3 eine protokollierte Nachricht an die vermittlungstechnische Anlage 4, die daraufhin die Rufumleitung wieder rückgängig macht.

Diese Form der Zurücknahme einer Rufumleitung hat den Vorteil, daß die dynamische Rufumleitung an nahezu alle praktisch auftretenden Fälle anpaßbar ist.

## Patentansprüche

1. Verfahren zur Umleitung eines Rufes, der an eine vorgegebene Empfängeradresse eines Kommunikationsnetzes adressiert ist, zu einer Zielrufnummer eines Mobilfunknetzes, insbesondere eines GSM- oder DCS-Mobilfunknetzes, wobei innerhalb des Mobilfunknetzes jede übertragene Information die Absenderrufnummer enthält,
dadurch gekennzeichnet,
daß durch einen Teilnehmer des Mobilfunknetzes an einen Kurzmitteilungsservice des Mobilfunknetzes eine einen Auftrag enthaltende Kurzmitteilung übermittelt wird,
daß der Kurzmitteilungsservice anhand des Auftrags die Empfängeradresse mit der Absenderrufnummer an eine vermittlungstechnische Anlage weitergeleitet wird und
daß die vermittlungstechnische Anlage eine Umleitung des Rufes von der Empfängeradresse des Kommunikationsnetzes zur Absenderrufnummer des Mobilfunknetzes als neue Zielrufnummer einrichtet.

2. Verfahren nach Anspruch 1,
dadurch gekennzeichnet,
daß der Auftrag die Empfängeradresse enthält.

3. Verfahren nach einem der Ansprüche 1 oder 2,
dadurch gekennzeichnet,
daß der Kurzmitteilungsservice der Short Message Service des Mobilfunknetzes für zu übermittelnde Zeichen ist und daß die Kurzmitteilung als Kurzmitteilungsinhalt die Empfängeradresse enthält.

4. Verfahren nach Anspruch 3,
dadurch gekennzeichnet,
daß die Absenderrufnummer im Header der Kurzmitteilung in kodierter Form enthalten ist.

5. Verfahren nach einem der Ansprüche 1 bis 4,
dadurch gekennzeichnet,
daß die Empfängeradresse eine logistische Organisationsnummer einer Organisation ist, über die das der Organisationsnummer zugeordnete, zeitlich wechselnde Personal der Organisation erreichbar ist.

6. Verfahren nach Anspruch 5,
dadurch gekennzeichnet,
daß die Organisationsnummer eine Flugnummer einer Fluggesellschaft ist.

7. Verfahren nach Anspruch 5,
dadurch gekennzeichnet,
daß die Organisationsnummer eine Zugnummer einer Bahngesellschaft ist.

8. Verfahren nach Anspruch 1 bis 7,
dadurch gekennzeichnet,
die Umleitung des Rufes dadurch zurücknehmbar ist, daß als vorgegebene Empfängeradresse eine vorgegebene Zeichenfolge an den Kurzmitteilungsservice des Mobilfunknetzes übermittelt wird.

9. Verfahren nach Anspruch 1 bis 8,
dadurch gekennzeichnet,
daß der Kurzmitteilungsservice die Empfängeradresse und die Absenderrufnummer in ein Protokoll eingebettet an die vermittlungstechnische Anlage weiterleitet.
